# EUROPEAN PATENT APPLICATION

(11) **EP 4 475 273 A1**
(43) Date of publication of application: **11.12.2024**
(21) Application number: 22924922.2
(22) Date of filing: 04.10.2022
(51) Int. Cl.: H01M 10/54, F27D 7/06, F27D 17/00

(54) **HEAT TREATMENT METHOD FOR LITHIUM ION BATTERY WASTE**

(30) Priority: 01.02.2022 JP 2022014414
(71) Applicant: JX METALS CIRCULAR SOLUTIONS CO., LTD, Tokyo 105-8417 (JP)
(72) Inventor: MIYANAGA,Hiroshi, Hitachi-shi, Ibaraki 317-0056 (JP); HAGA,Yasufumi, Hitachi-shi, Ibaraki 317-0056 (JP)
(74) Representative: Arnold & Siedsma
(86) International application number: PCT/JP2022/037172
(87) International publication number: WO 2023/149017

(57) **Abstract**

A heat treatment method for lithium ion battery waste includes: a battery heating step of heating lithium ion battery waste in a heat treatment furnace 1 while feeding an inert gas; and a gas combustion step of delivering a gas generated in the heat treatment furnace 1 into a gas combustion furnace 2 and burning the generated gas in the gas combustion furnace 2, wherein a gauge pressure in the heat treatment furnace is maintained in a range of -0.20 kPa to -0.01 kPa, when the lithium ion battery waste is heated while feeding the inert gas into the heat treatment furnace 1 in the battery heating step.

## Description

### [Technical Field]

This specification discloses a heat treatment method for lithium ion battery waste.

### [Background Art]

In recent years, the recovery of valuable metals from lithium ion battery waste discarded due to product life, manufacturing defects, or other reasons has been widely studied from the viewpoint of effective utilization of resources.

In this regard, Patent Literature 1 discloses:
"when recovering lithium from battery waste, lithium in battery powder resulting from a heat treatment by heating battery waste in a heat treatment furnace and then crushing and sieving it is leached in water"; and
"by the heat treatment, lithium in lithium compounds such as lithium composite oxides that may be contained in battery waste is converted to a form of lithium carbonate, which is easily leached in water".

Then, for the purpose of "stably generating lithium carbonate", Patent Literature 1 also discloses a method for heat-treating battery waste containing lithium, the method comprising: allowing an atmospheric gas comprising oxygen and at least one selected from the group consisting of nitrogen, carbon dioxide and water vapor to flow in a heat treatment furnace in which the battery waste is arranged, and heating the battery waste while adjusting an oxygen partial pressure in the furnace.

### [Citation List]

### [Patent Literature]

[PTL 1]
Japanese Patent Application Publication No. 2021-163645 A

### [Summary of Invention]

### [Technical Problem]

The lithium ion battery waste is subjected to the heat treatment in an inert atmosphere. Therefore, it may be heated in a heat treatment furnace while feeding an inert gas. In this case, a relatively large amount of combustible gas derived from electrolytes or other components may be generated from the lithium ion battery waste. In order to burn such a generated gas, it is considered that a gas combustion furnace is arranged together with the heat treatment furnace.

Here, when the generated gas is delivered from the heat treatment furnace to the gas combustion furnace and burned in the gas combustion furnace, an oxygen concentration in the heat treatment furnace may not reach a certain level, and the generated gas may leak out of the heat treatment furnace.

This specification provides a heat treatment method for lithium ion battery waste, which can be maintained at a relatively low oxygen concentration in a heat treatment furnace while suppressing leakage of a gas generated from the lithium ion battery waste in the heat treatment furnace to the outside.

### [Solution to Problem]

The heat treatment method for lithium ion battery waste disclosed in this specification comprises: a battery heating step of heating lithium ion battery waste in a heat treatment furnace while feeding an inert gas; and a gas combustion step of delivering a gas generated in the heat treatment furnace into a gas combustion furnace and burning the generated gas in the gas combustion furnace, wherein a gauge pressure in the heat treatment furnace is maintained in a range of -0.20 kPa to -0.01 kPa, when the lithium ion battery waste is heated while feeding the inert gas into the heat treatment furnace in the battery heating step.

### [Advantageous Effects of Invention]

According to the heat treatment method for lithium ion battery waste as described above, the interior of the heat treatment furnace can be maintained at a relatively low oxygen concentration while suppressing leakage of a gas generated from the lithium ion battery waste in the heat treatment furnace to the outside.

### [Brief Description of Drawings]

[Fig. 1]

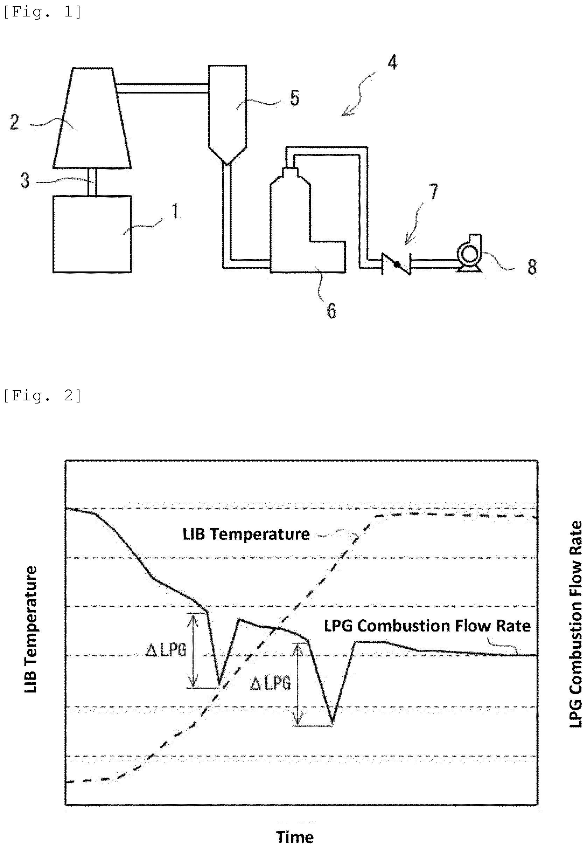

   FIG. 1 is a schematic diagram showing an example of equipment including a heat treatment furnace and a gas combustion furnace, which can carry out a heat treatment method for lithium ion battery waste according to an embodiment.
[Fig. 2]
   FIG. 2 is a graph showing an example of changes in a temperature of lithium ion battery waste when heating the lithium ion battery waste and in an LPG combustion flow rate in a gas combustion furnace over time.

### [Description of Embodiments]

An embodiment of the heat treatment method for lithium ion battery waste as described above will be described in detail below.

The heat treatment method according to one embodiment includes: a battery heating step of heating lithium ion battery waste while feeding an inert gas in a heat treatment furnace 1 in equipment as shown in FIG. 1; and a gas combustion step of delivering a gas generated in the heat treatment furnace 1 (generated gas) into a gas combustion furnace 2 and burning the generated gas in the gas combustion furnace 2.

In the battery heating step, the lithium ion battery waste is heated while feeding the inert gas to adjust the atmosphere in the furnace. In this case, if an oxygen concentration in the heat treatment furnace 1 is lowered to some extent, the metal contained in the lithium ion battery waste can be effectively converted to a form that can be easily processed later. If the pressure in the heat treatment furnace 1 is lower than the atmospheric pressure, the air outside the furnace tends to flow into the heat treatment furnace 1, so that it would be desirable to maintain the heat treatment furnace 1 at an internal pressure (i.e., positive pressure) of more than or equal to the atmospheric pressure if the purpose is only to lower the oxygen concentration in the heat treatment furnace 1.

On the other hand, when the lithium ion battery waste is heated in the heat treatment furnace 1, a combustible gas derived from the electrolytes or other components contained in the lithium ion battery waste is generated from the lithium ion battery waste. Such a generated gas is fed into the gas combustion furnace 2 connected to the heat treatment furnace 1 and burned. Here, if the inside of the heat treatment furnace 1 is maintained at a positive pressure, the generated gas leaks out of the heat treatment furnace 1. In order to suppress the leakage of the generated gas, it is preferable to keep the inside of the heat treatment furnace 1 under a negative pressure. However, if the internal pressure of the heat treatment furnace 1 is too low, air or outside air flows into the heat treatment furnace 1, making it impossible to maintain the predetermined low oxygen concentration.

From such a point of view, in this embodiment, a gauge pressure in the heat treatment furnace 1 is maintained in a range of -0.20 kPa to -0.01 kPa, when the lithium ion battery waste is heated while feeding the inert gas into the heat treatment furnace 1 in the battery heating step. This allows the inside of the heat treatment furnace 1 to be maintained at the desired low oxygen concentration while suppressing the leakage of the generated gas.

### (Lithium ion Battery Waste)

Lithium ion battery waste of interest is vehicle lithium ion batteries or consumer electronics lithium ion batteries, which have been discarded due to battery product life, manufacturing failure, or other reasons. The vehicle lithium ion batteries include those contained in vehicle battery packs mounted on vehicles such as hybrid vehicles and electric vehicles. The consumer electronics lithium ion batteries include those used in various electronic devices such as mobile phones. Recovery of valuable metals such as cobalt, nickel and other valuable metals from such lithium ion battery waste is required from the viewpoint of effective utilization of resources. The lithium ion battery waste refers to lithium ion batteries subject to recycling, regardless of whether the lithium ion batteries are traded for value, or traded at no charge or as industrial waste.

The vehicle battery pack generally includes a metal case forming a housing around the case, a battery having a plurality of battery cells such as lithium ion batteries and other components that are housed inside the case. The battery cells may be included in the vehicle battery pack as a battery module in which the battery cells are packed. There are vehicle battery packs having various shapes, depending on the space constraints of the vehicles on which they are mounted. For example, there is a vehicle battery pack having a vertically long outer shape which is longer in one direction, such as a rectangular parallelepiped shape that is substantially rectangular in a plane view.

The lithium ion battery waste typically includes: a cathode material in which a cathode active material comprised of single metal oxides of one or more of lithium, nickel, cobalt and manganese, or two or more composite metal oxides is applied and fixed onto an aluminum foil (a cathode substrate) via, for example, an organic binder such as polyvinylidene fluoride (PVDF); an anode material made of a carbon-based material; and an organic electrolyte such as ethylene carbonate or diethyl carbonate or other electrolyte. In addition, the lithium ion battery waste may contain copper, iron, and the like.

The Lithium ion battery waste includes, in addition to the vehicle battery packs, battery cells taken out of the vehicle battery packs, and the like. The battery modules in which the battery cells are packed may be used as the lithium ion battery waste. The battery cells may contain electrolytes or resins, and generate a gas when heating them, and thus it may be necessary to prevent the leakage of the generated gas in the heat treatment furnace 1 and to maintain the oxygen concentration as described above. Further, the cathode materials with aluminum foils, and powder obtained from the battery waste (hereinafter referred to as "battery powder"), which have been taken out from the battery cells or the like and optionally subjected to any treatment, may be used as the lithium ion battery waste. That is, the heat treatment method according this embodiment can be applied to vehicle battery packs, battery cells, battery modules, cathode materials with aluminum foils, battery powder, and the like.

### (Battery Heating Step)

In the battery heating step, the above lithium ion battery waste is heated in an inert atmosphere while feeding an inert gas in the heat treatment furnace 1.

The heat treatment performed in the inert atmosphere results in suppression of explosive combustion of the organic electrolyte and the like which may be contained in the lithium ion battery waste to provide easy control of a temperature in the heat treatment furnace 1, as well as leads to suppressed production of nickel oxide or cobalt oxide and promoted production of cobalt and nickel which are easily dissolved in an acid to provide an increased recovery rate of valuable metals.

If it becomes difficult to control the temperature in the heat treatment furnace 1, aluminum such as aluminum foils may be molten, and valuable metals such as cobalt and nickel may be taken into the molten aluminum and solidified. In this case, there is concern that the valuable metals will be removed together with the aluminum in the subsequent sieving step, resulting in a decrease in the recovery rate of the valuable metals. If the temperature in the heat treatment furnace 1 can be controlled, it is possible to suppress the formation of powdery lithium aluminate due to the reaction of aluminum with lithium oxide. The formation of lithium aluminate, which is promoted at an elevated temperature and under higher oxygen partial pressure, will lead to a decreased leaching rate of lithium when leaching the lithium in the subsequent lithium dissolving step, because lithium aluminate has a lower solubility in water than lithium carbonate. The aluminum foil that has not reacted to form lithium aluminate can be easily separated in the sieving step. On the other hand, when lithium aluminate is produced, the aluminum foil becomes brittle and easily contaminated into the battery powder in the sieving step.

In order to provide the inert atmosphere in the heat treatment furnace 1, the inert gas is fed into the heat treatment furnace 1. Specifically, the inert gas can be a gas containing at least one selected from the group consisting of nitrogen, carbon dioxide and water vapor. Among them, a gas mainly containing nitrogen is preferable. Oxygen may be contained as long as it is in a trace amount to some extent. The oxygen partial pressure during the heat treatment is maintained, for example, in the range of 0 atm to 4 × 10⁻² atm, and preferably 1 × 10⁻² atm or less, and more preferably 1 × 10⁻³ atm or less. This can suppress embrittlement of aluminum in the lithium ion battery waste. If aluminum becomes embrittled during the heat treatment, the separability of aluminum may be deteriorated during the subsequent sieving step. The oxygen concentration in the heat treatment furnace 1 is, for example, from 0.05% by volume to 4.00% by volume, and preferably less than 1% by volume, and more preferably less than 0.1% by volume. It is desirable to maintain the oxygen partial pressure and oxygen concentration in the heat treatment furnace 1 at the low level as described above over a period of time between the time when the temperature of the lithium ion battery waste is increased by starting the heating and the time when the temperature is maintained at the predetermined temperature. In this case, the gas generated during the temperature increase (gas or the like derived from electrolytes, resin decomposition, and the like) is not ignited in the heat treatment furnace 1, and it can be burned in the gas combustion furnace 2 as intended. The oxygen partial pressure and the oxygen concentration can be measured with a zirconia oxygen analyzer . The oxygen partial pressure and the oxygen concentration as used herein mean that at least the values measured when the measurement is possible may be in those ranges. For example, when the organic electrolyte evaporates, the measurement may not be possible, but the oxygen partial pressure and oxygen concentration during such a time when the measurement is not possible are irrelevant.

The flow rate of the inert gas fed into the heat treatment furnace 1 is preferably from 1 Nm³/h to 60 Nm³/h, and more preferably from 6 Nm³/h to 60 Nm³/h, and even more preferably from 7 Nm³/h to 12 Nm³/h. If the flow rate of the inert gas is too large, the temperature distribution during heat treatment may become large and the heat treatment may not be performed at the optimum temperature. On the other hand, if the flow rate of the inert gas is too low, the oxygen partial pressure distribution during the heat treatment may become large, and the heat treatment may not be performed at the optimum oxygen partial pressure.

Also, in the battery heating step, the lithium ion battery waste can be heated to reach and maintain a temperature of 300°C to 800°C.

When the lithium ion battery waste is heated in the heat treatment furnace 1 as described above, a gas derived from the electrolyte or the like is generated from the housing of the lithium ion battery waste. Since such a generated gas is combustible and needs to be burned out, it is delivered from the heat treatment furnace 1 to the gas combustion furnace 2 and burned in the gas combustion furnace 2 in the gas combustion step.

Here, when heating the lithium ion battery waste while feeding the inert gas into the heat treatment furnace 1, the gauge pressure in the heat treatment furnace 1 (i.e., the pressure obtained by subtracting the atmospheric pressure from the absolute pressure) is from -0.20 kPa to - 0.01 kPa.

By thus heating the lithium ion battery waste while providing the inside of the heat treatment furnace 1 with a slight negative pressure, the generated gas is prevented from leaking to the outside of the heat treatment furnace 1, as well as oxygen is prevent from flowing into the heat treatment furnace 1, resulting in easily maintenance of the inside of the heat treatment furnace 1 at the predetermined oxygen concentration. In other words, if the gauge pressure in the heat treatment furnace 1 is higher than -0.01 kPa, the generated gas may leak out of the heat treatment furnace 1. On the other hand, if the gauge pressure in the heat treatment furnace 1 is lower than - 0.20 kPa, the outside air may flow into the heat treatment furnace 1 and the desired oxygen concentration may not be achieved.

Moreover, in this embodiment, the gauge pressure in the heat treatment furnace 1 of from -0.20 kPa to -0.01 kPa can reduce any load on the gas combustion furnace 2 that burns out the generated gas delivered from the heat treatment furnace 1. This allows a relatively small gas combustion furnace 2 to be used. In other words, when the gauge pressure in the heat treatment furnace 1 is higher than -0.01 kPa to provide the inside of the heat treatment furnace 1 with positive pressure, the generated gas in the heat treatment furnace 1 becomes difficult to flow into the gas combustion furnace 2, and delivered at once at a certain timing after the generated gas is accumulated in the heat treatment furnace 1. At this time, since the generated gas is combustible, it is necessary to limit the amount of heat fed from a heat source of the gas combustion furnace 2 to maintain the temperature in the gas combustion furnace 2 at a constant temperature. However, when the generated gas is delivered at once to the combustion furnace 2, it will be difficult to maintain the temperature in the gas combustion furnace 2. Further, if the gauge pressure in the heat treatment furnace 1 is lower than -0.20 kPa, the generated gas will immediately flow into the gas combustion furnace 2, and in this case, the load on the gas combustion furnace 2 will also increase.

Moreover, the heat treatment furnace 1 and the gas combustion furnace 2 can be connected to each other by a connecting pipe 3 as shown in Fig. 1. The generated gas in the heat treatment furnace 1 is directed to the gas combustion furnace 2 through the connecting pipe 3. In this case, when the pressure in the heat treatment furnace 1 is higher, the flow rate of the generated gas from the heat treatment furnace 1 to the gas combustion furnace 2 becomes slow, and the tar flowing into the gas combustion furnace 2 together with the generated gas aggregates in the connecting pipe 3, so that clogging in the connection pipe 3 tends to occur. On the other hand, in this embodiment, the internal pressure of the heat treatment furnace 1 is lowered as described above, so that it is possible to effectively suppress the agglomeration of the tar and clogging in the connecting pipe 3.

From the viewpoint as described above, the gauge pressure in the heat treatment furnace is more preferably from -0.16 kPa to -0.13 kPa. The gauge pressure in the heat treatment furnace 1 can be measured with a pressure gauge. Specifically, for example, a pipe for measurement is inserted into the heat treatment furnace 1, the pipe is connected to a pressure gauge installed on an outer side of the heat treatment furnace 1, and the gauge pressure in the heat treatment furnace 1 is measured with the pressure gauge.

By the way, on a downstream side of the heat treatment furnace 1 and the gas combustion furnace 2 in the gas flow direction, as illustrated in Fig.1, gas treatment equipment 4 may be provided to treat an exhaust gas discharged from the gas combustion furnace 2 after burning of the generate gas. The gas treatment equipment 4 is not particularly limited as long as it can appropriately treat the exhaust gas derived from the electrolyte or the like. It may include, for example, a gas cooler 5 that cools the exhaust gas and a gas scrubber 6 that cleans the exhaust gas that has passed through the gas cooler 5.

On the downstream side of the heat treatment furnace 1 and the gas combustion furnace 2 in the gas flow direction, a furnace pressure adjusting mechanism for adjusting the internal pressure of the heat treatment furnace 1 as described above is preferably provided. In the example shown in Fig. 1, as the furnace pressure adjusting mechanism, a valve 7 and an exhaust fan 8 are provided on the downstream side of the heat treatment furnace 1 and the gas combustion furnace 2 in the gas flow direction, and further on the downstream side of the gas treatment equipment 4. In the illustrated example in which the heat treatment furnace 1 and the gas treatment equipment 4 are connected to each other by a closed pipeline that is not open to the atmosphere, the internal pressure of the heat treatment furnace 1 can be controlled by automatically or manually adjusting the opening of the valve 7 on the downstream side of the gas treatment equipment 4, and/or by adjusting a rotation speed of the exhaust fan 8. In this example, either the valve 7 or the exhaust fan 8 can adjust the internal pressure of the heat treatment furnace 1, so that either the valve 7 or the exhaust fan 8 may be omitted. It should be noted that regardless of the configuration of the furnace pressure adjusting mechanism, as described above, the adjusting of the gauge pressure in the heat treatment furnace 1 in the predetermined range can achieve effects of suppressing gas leakage and maintaining the oxygen concentration. Therefore, the furnace pressure adjusting mechanism is not limited to the valve 7 and the exhaust fan 8 shown in Fig. 1, and various structures may be used.

As the heat treatment furnace 1, a special furnace such as a vacuum furnace may be used, but it is also possible to use a general furnace which is not as airtight as a vacuum furnace. In such a general furnace, a small amount of air (oxygen) may flow in from the outside, but by adjusting the internal pressure and other conditions as described above, the oxygen concentration in the furnace can be maintained at a sufficiently low level. For the vacuum furnace, a sealing structure of a furnace door, a chamber for creating a vacuum environment, a vacuum pump and vacuum valves for creating a vacuum may be arranged, and the sealing of the installation ports of instrumentation equipment for measuring the temperature and pressure in the furnace may be strengthened. Also, some vacuum furnaces are not suitable for a treatment for a relatively large amount of gas, such as the heat treatment of lithium ion battery waste. On the other hand, since the general furnace does not have such a structure or the like, it is possible to reduce installation costs and maintenance costs, and the heat treatment of lithium ion battery waste can be effectively performed. The heat treatment furnace 1 can be of a continuous type as well as of a batch type. This embodiment can also be applied when a continuous heat treatment furnace 1 is used. The heat treatment furnace 1 can be a furnace in which a heat source is exposed to the object of the heat treatment (lithium ion battery waste, and the like), but it may be a muffle furnace in which the object of heat treatment is isolated from the heat source. The muffle furnace has a highly airtight structure, which can suppress the inflow of outside air and eliminate the influence of oxygen released from the refractories. Therefore, when the heat treatment furnace 1 is the muffle furnace, the flow rate of the inert gas fed into the heat treatment furnace 1 may be reduced. If it is desired to reduce the flow rate of the inert gas fed to, for example, 6 Nm³/h or less, it is desirable to use the muffle furnace as the heat treatment furnace 1.

It should be note that the lithium ion battery waste may be subjected to a heat treatment in an air atmosphere before or after the heat treatment in the inert atmosphere as described above, preferably after the heat treatment in the inert atmosphere, if necessary. The heat treatment in the air atmosphere is preferable in that it may be easily performed without adjusting the atmosphere. The heat treatment int the air atmosphere can heat the lithium ion battery waste to reach and maintain a temperature of 300°C to 800°C.

### (Gas Combustion Step)

In the gas combustion step, the generated gas delivered from the heat treatment furnace 1 to the gas combustion furnace 2 is burned at a predetermined high temperature in the gas combustion furnace 2 to render it harmless. The gas after combustion is discharged from the gas combustion furnace 2 as an exhaust gas and may be delivered to the gas treatment equipment 4 as previously described.

By maintaining the internal pressure in the heat treatment furnace 1 in the predetermined range in the battery heating step, the generated gas flows into the gas combustion furnace 2 at an appropriate flow rate in the gas combustion step. This can allow the load on the gas combustion furnace 2 to be kept low, so that the generated gas can be treated with a relatively small gas combustion furnace 2.

The inside of the gas combustion furnace 2 can be maintained at a temperature of preferably from 800°C to 1000°C, and more preferably from 850°C to 900°C. If the temperature in the gas combustion furnace 2 is too low, the generated gas may not effectively burn, while if the temperature is too high, the time required for the generated gas to effectively burn in the gas combustion furnace 2 cannot be ensured, or the capacity of the gas treatment equipment 4 in the subsequent stage may be exceeded.

In the gas combustion furnace 2, the temperature tends to increase due to combustion of the generated gas. In that case, it is preferable to adjust the temperature in the gas combustion furnace 2 by changing an amount of heat fed from the heat source of the gas combustion furnace 2 depending on the combustion of the generated gas in the gas combustion furnace 2.

More particularly, if the heat source is LPG gas used for an LPG burner, the amount of the LPG gas fed can be controlled such that the temperature in the gas combustion furnace 2 does not exceed a predetermined temperature with burning of the generated gas. For example, the graph shown in Fig. 2 shows that the temperature of the lithium ion battery waste (LIB temperature) increases as time elapses after the start of heating the lithium ion battery waste in the heat treatment furnace 1. In this case, the generated gas in the heat treatment furnace 1 flows into the gas combustion furnace 2 and burns in the gas combustion furnace 2. In order to prevent the temperature in the gas combustion furnace 2 from exceeding the predetermined temperature depending on the burning, the adjustment is performed such that the combustion flow rate of the LPG gas (LPG combustion flow rate), which is the heat source of the gas combustion furnace 2, is decreased. The LPG burner often mixes LPG gas with air and burns the mixture, and the LPG combustion flow rate as described above or ΔLPG as described later refer to a flow rate of the LPG gas, rather than the flow rate of the mixed gas with air.

Here, when a certain large amount of the generated gas flows into the gas combustion furnace 2, the combustion becomes intense and the temperature in the gas combustion furnace 2 may rapidly increase. In order to suppress this, it is desirable to rapidly reduce the LPG combustion flow rate. The amount of the LPG combustion flow rate reduced is referred to as ΔLPG herein. If the ΔLPG becomes too large, the LPG combustion flow rate reaches the minimum flow (minimum amount of LPG combustion flow rate) and the LPG combustion flow rate cannot be further reduced, resulting in a risk that the temperature in the gas combustion furnace 2 will exceed a predetermined temperature. For the above minimum flow, there are a case where a flow rate greater than 0 Nm³/h is set (where a constant amount of the LPG gas continues to be fed even if the LPG combustion flow rate is reduced at the maximum), and a case where the follow rate is 0 Nm³/h (where the feed of the LPG gas is stopped). In both cases, when the LPG combustion flow rate reaches the minimum flow, it cannot be reduced any further, so that the temperature exceeding cannot be prevented. In Fig. 2, the LPG combustion flow rate is rapidly reduced twice, and the first time would be when a large amount of the gas derived from the electrolyte is generated, and the second time would be when a CH-based gas is generated due to resin decomposition.

In this embodiment, the gauge pressure in the heat treatment furnace 1 is maintained in the range as described above in the battery heating step, so that the generated gas flows into the gas combustion furnace 2 at an appropriate flow rate, whereby the ΔLPG can be suppressed to a lower level. For example, in the case of the vehicle battery pack, the ΔLPG per a battery module may be suppressed to 1.0 Nm³/hr or less, or even 0.40 Nm³/hr or less, particularly 0.37 Nm³/hr or less, typically from 0.15 to 0.25 Nm³/hr, when the gas derived from the electrolyte is generated, and it may be suppressed to 1.0 Nm³/hr or less, or further 0.40 Nm³/hr or less, particularly 0.29 Nm³/hr or less, typically from 0.25 to 0.35 Nm³/hr, when the CH-base gas is generated due to the resin decomposition, although they depend on the lithium ion battery waste to be treated. Further, the ΔLPG per unit mass (1 kg) of the electrolyte contained in the lithium ion battery waste may be suppressed to 1.5 Nm³/hr or less, further 0.60 Nm³/hr or less, particularly 0.56 Nm³/hr or less, typically from 0.20 to 0.40 Nm³/hr, when the gas derived from the electrolyte is generated. Also, the ΔLPG per unit mass (1 kg) of the resin contained in the lithium ion battery waste may be suppressed to 4.5 Nm³/hr or less, further 1.8 Nm³/hr or less, particularly 1.3 Nm³/hr or less, typically from 1.1 to 1.6 Nm³/hr, when the CH-based gas is generated due to the resin decomposition. As used herein, "when the gas derived from the electrolyte is generated" means a time when the temperature of the lithium ion battery waste reaches 150°C to 190°C. It is typically around 170°C. In many cases, as the lithium ion battery waste is heated, a component having a lower boiling point, among components of the electrolyte in the inside starts to evaporate sequentially, and when the temperature reaches the above temperature range, the internal pressure reaches a predetermined level, and a safety valve opens and the gas derived from the electrolyte is generated. Further, "when the CH-based gas" is generated means a time when the temperature of the lithium ion battery waste reaches 380°C to 420°C. This temperature range coincides with the decomposition (vaporization) temperature of the resin attached to the battery module of the lithium ion battery waste, which is typically around 400°C. In many cases, the resin decomposition gas is a mixture of multiple hydrocarbon compounds. One lithium ion battery waste may contain 662 g of electrolyte and 230 g of resin. It should be noted that the ΔLPG may vary depending on whether or not the lithium ion battery waste is exploded during the heat treatment, and on the residual voltage of the lithium ion battery waste, which will be described later, and the like. However, if the conditions are substantially the same, the maintaining of the gauge pressure in the heat treatment furnace in the range of -0.20 kPa to -0.01 kPa can reduce the ΔLPG as compared with the case where the gauge pressure is out of that range.

In the battery heating step as described above, it is preferable to heat the lithium ion battery waste having a residual voltage of less than 2.4V. If the residual voltage is higher, the ΔLPG tends to increase when the gas derived from the electrolyte is generated.

On the other hand, even if the residual voltage of the lithium ion battery waste is 2.4 V or more, an increase in ΔLPG can be suppressed to some extent by controlling the gauge pressure in the heat treatment furnace 1 as described above. Therefore, in this embodiment, even in the case of the lithium ion battery waste having a relatively high residual voltage, it can be subjected to the heat treatment. In order to reduce the residual voltage of the lithium ion battery waste, an additional step of discharging the lithium ion battery waste is required, but by subjecting the lithium ion battery waste having the relatively high residual voltage to the heat treatment, the discharge step can be eliminated.

When the lithium ion battery waste having a relatively high residual voltage is subjected to the heat treatment, the discharging step may also be omitted for some lithium ion battery waste, such that the lithium ion battery waste having a residual voltage higher than a predetermined voltage is subjected to the discharging step, but the lithium ion battery waste having a residual voltage lower than the predetermined voltage is not subjecting to the discharging step. Even in this case, the treated amount in the discharging step can be reduced, so that the costs required for the discharging step can be reduced.

The reason why the ΔLPG varies with the residual voltage would be as follows. As the battery cells of the lithium ion battery waste are heated and the temperature is increased, the softening of the separator and the pressure applied to the inside of the battery cells cause a short circuit, which will sharply increases the temperature of the battery cells. The degree of the rapid increase is higher as the residual voltage is higher. Further, the rapid increase in the temperature of the battery cells leads to rapid progression of evaporation of the electrolyte. Therefore, when the safety valve of the battery cell is opened, the releasing speed of the released electrolyte increases. As a result, it is believed that the ΔLPG increases.

When the internal pressure of the heat treatment furnace 1 is out of the predetermined range, the amount of the generated gas flowing into the gas combustion furnace 2 increases and the ΔLPG increases, which will thus require ensuring of a difference between the LPG combustion flow rate and the minimum flow by the increase in the ΔLPG, that is, which will require a larger LPG combustion flow rate. As a result, the size of the gas combustion furnace 2 will have to be increased. As an example, when the gauge pressure in the heat treatment furnace is reduced from -0.20 kPa to about -0.30 kPa, it is expected that the ΔLPG may be from 0.64 Nm³/hr to 1.0 Nm³/hr.

In addition, the heat source for the gas combustion furnace may be, in addition to the above LPG gas (liquefied petroleum gas whose main component is propane or butane), LNG gas (liquefied natural gas whose main component is methane and is used as city gas or the like), heavy oil, or recycled oil.

### (Subsequent Step)

The lithium ion battery waste that has undergone the above battery heating step can optionally be subjected to a crushing step, a pulverizing/powdering step, and a sieving step.

The crushing is carried out in order to take out the battery from the case of the lithium ion battery waste of the vehicle battery packs and the like, destroy the housing of the battery, and selectively separate the cathode active material from the aluminum foil coated with the cathode active material. Here, various known devices or apparatuses can be used, and specific examples include an impact type crusher that can crush the lithium ion battery waste by applying an impact while cutting the lithium ion battery waste, including, for example, a sample mill, a hammer mill, a pin mill, a wing mill, a tornado mill, a hammer crusher and the like. A screen can be installed at an outlet of the crusher, whereby the batteries are discharged from the crusher through the screen when they are crushed to a size enough to allow it to pass through the screen.

After crushing, if necessary, the crushed batteries may lightly pulverized into powder, and it is then sieved using a sieve having an appropriate opening. The pulverizing and powdering improve the separability of the cathode active material fixed to the aluminum foil from the aluminum foil. It should be noted that the pulverizing/powdering may be omitted. Thus, for example, aluminum, copper or the like remains on the sieve, and battery powder containing lithium, cobalt, and nickel from which aluminum, copper or the like has been removed to some extent can be obtained under the sieve.

The above battery powder is brought into contact with either a weakly acidic solution, water or an alkaline solution in a lithium dissolving step to dissolve the lithium contained in the battery powder in the solution. The lithium dissolved solution can be subjected to treatments such as solvent extraction, neutralization and carbonation, thereby recovering lithium in the lithium dissolved solution as lithium carbonate.

The residue left undissolved in water or the solution in the lithium dissolving step can be extracted by solid-liquid separation using a filter press, a thickener, or the like, and then leached with an acid in an acid leaching step. The acid leaching step can be performed by a known method or under known conditions. For example, the pH may be 0.0 to 3.0.

The leached solution obtained by the acid leaching and the solid-liquid separation in the acid leaching step can be subjected to steps such as, for example, neutralization, and solvent extraction, thereby recovering various metals such as cobalt and nickel.

### [Examples]

Next, the heat treatment method for the lithium ion battery waste as described above was experimentally carried out and the effects thereof were confirmed, as described below. However, the descriptions herein are merely for illustrative and are not intended to be limited.

Using the predetermined heat treatment furnace and gas combustion furnace, the lithium ion battery waste was heated to 600°C while feeding a nitrogen gas in the heat treatment furnace, and the generated gas was burned in the gas combustion furnace. The lithium ion battery waste to be heat-treated was three battery modules bundled with battery cells contained in a vehicle battery pack. The flow rate of the nitrogen gas fed into the heat treatment furnace was 7.8 Nm³/h, and the LPG combustion flow rate and the like were adjusted so that the temperature in the gas combustion furnace was maintained at 850°C.

### (Example 1)

The internal pressure (gauge pressure, furnace pressure) of the heat treatment furnace was controlled to the range of -0.16 kPa to -0.13 kPa. As a result, the oxygen concentration in the heat treatment furnace could be reduced to less than 0.1% by volume. The oxygen partial pressure in the heat treatment furnace was 0.998 × 10⁻³ atm. Further, no leakage of the generated gas to the outside of the heat treatment furnace was confirmed. The flow rate of the gas (generated gas and nitrogen gas) in the connecting pipe connecting the heat treatment furnace to the gas combustion furnace was 28.2 m³/h. As shown in Table 1, the ΔLPG could be suppressed at a relatively low level both when the gas derived from the electrolyte was generated and when the CH-based gas was generated. The residual voltage (cell voltage) of the battery cells in the lithium ion battery waste before the heat treatment was approximately 0 V. Since the three battery modules were treated herein, the overall ΔLPG (total ΔLPG) was almost three times the ΔLPG per a module in Table 1, and was about 0.67 Nm³/h when the electrolyte was generated, and 0.86 Nm³/h when the CH-based gas was generated.

### (Example 2)

Example 2 was the same as Example 1, with the exception that the residual voltage of the lithium ion battery waste before the heat treatment was 2.4 V. As a result, the ΔLPG when the gas derived from the electrolyte was generated was slightly larger than that of Example 1. The oxygen concentration and oxygen partial pressure in the heat treatment furnace were the same as those of Example 1. The total ΔLPG was about 1.11 Nm³/h when the gas derived from the electrolyte was generated, and about 0.86 Nm³/h when the CH-based gas was generated.

### (Comparative Example 1)

Comparative Example 1 was the same as Example 1, with the exception that the internal pressure of the heat treatment furnace was in the range of from -0.50 kPa to -0.30 kPa. In this case, the oxygen concentration in the heat treatment furnace could not be reduced to 0.1% by volume. This would be because air flowed into the inside from the outside of the heat treatment furnace. In Comparative Example 1, the oxygen concentration did not become less than 0.1% by volume, and so the heating test of the lithium ion battery waste could not be performed.

### (Comparative Example 2)

Comparative Example 2 was the same as Example 1, with the exception that the internal pressure of the heat treatment furnace was 0 kPa. In this case, it was confirmed that the generated gas leaked out of the heat treatment furnace. Therefore, in Comparative Example 2, the heating test of the lithium ion battery waste could not be performed as well.

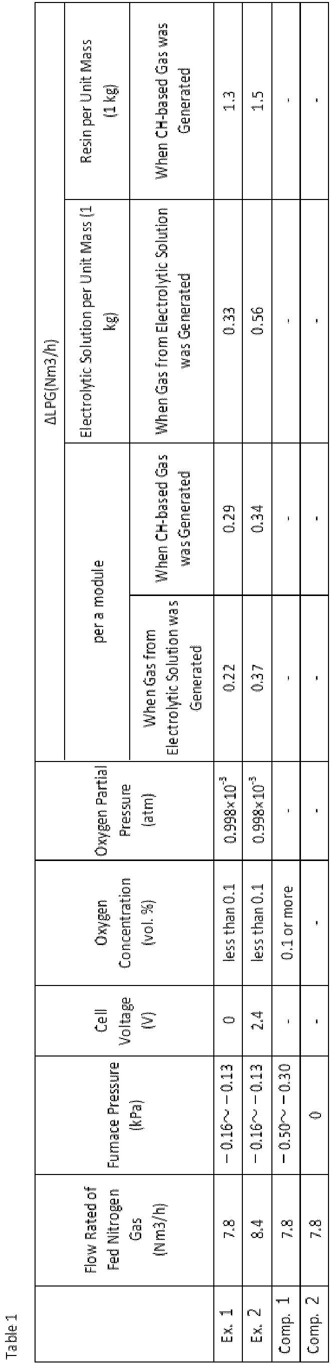

In view of the foregoing, it is found that according to the heat treatment method for lithium ion battery waste as described above, the interior of the heat treatment furnace can be maintained at a relatively low oxygen concentration while suppressing leakage of a gas generated from the lithium ion battery waste in the heat treatment furnace to the outside.

### [Description of Reference Numerals]

1 heat treatment furnace
2 gas combustion furnace
3 connecting pipe
4 gas treatment equipment
5 gas cooler
6 gas scrubber
7 valve
8 Exhaust fan

## Claims

1. A heat treatment method for lithium ion battery waste, the method comprising:
a battery heating step of heating lithium ion battery waste in a heat treatment furnace while feeding an inert gas; and
a gas combustion step of delivering a gas generated in the heat treatment furnace into a gas combustion furnace and burning the generated gas in the gas combustion furnace,
wherein a gauge pressure in the heat treatment furnace is maintained in a range of -0.20 kPa to -0.01 kPa, when the lithium ion battery waste is heated while feeding the inert gas into the heat treatment furnace in the battery heating step.

2. The heat treatment method according to claim 1, wherein, when the lithium ion battery waste is heated while feeding the inert gas into the heat treatment furnace in the battery heating step, an oxygen concentration in the heat treatment furnace is maintained at less than 1% by volume from a time when a temperature of the lithium ion battery waste is increased.

3. The heat treatment method according to claim 1 or 2, wherein, when the lithium ion battery waste is heated while feeding the inert gas into the heat treatment furnace in the battery heating step, an oxygen partial pressure in the heat treatment furnace is maintained at 1 × 10⁻² atm or less from a time when the temperature of the lithium ion battery waste is increased.

4. The heat treatment method according to any one of claims 1 to 3, wherein the lithium ion battery waste is heated at a temperature of 300°C to 800°C at a flow rate of the fed inert gas of from 1 Nm³/h to 60 Nm³/h in the battery heating step.

5. The heat treatment method according to any one of claims 1 to 4, wherein an exhaust gas from the gas combustion furnace is treated in a gas treatment equipment provided on a downstream side of the heat treatment furnace and the gas combustion furnace in a gas flow direction.

6. The heat treatment method according to any one of claims 1 to 5, wherein a gauge pressure in the heat treatment furnace is adjusted by a furnace pressure adjusting mechanism provided on a downstream side of the heat treatment furnace and the gas combustion furnace in a gas flow direction.

7. The heat treatment method according to any one of claims 1 to 6, wherein, in the gas combustion step, a temperature in the gas combustion furnace is controlled by changing an amount of heat fed from a heat source of the gas combustion furnace depending on the combustion of the generated gas in the gas combustion furnace.

8. The heat treatment method according to claim 7, wherein the heat source of the gas combustion furnace is LPG gas, LNG gas or heavy oil.

9. The heat treatment method according to claim 8,
wherein the lithium ion battery waste is vehicle battery packs, and the heat source of the gas combustion furnace is the LPG gas, and
wherein, in the gas combustion step, ΔLPG per a battery module is 1.0 Nm³/hr or less when a gas derived from an electrolyte is generated, and 1.0 Nm³/hr or less when a CH-based gas is generated.

10. The heat treatment method according to claim 8 or 9, wherein, in the gas combustion step, ΔLPG per unit mass (1 kg) of a electrolyte contained in the lithium ion battery waste is 1.5 Nm³/hr or less when the gas derived from the electrolyte is generated.

11. The heat treatment method according to any one of claims 8 to 10, wherein, in the gas combustion step, ΔLPG per unit mass (1 kg) of a resin contained in the lithium ion battery waste is 4.5 Nm³/hr or less when a CH-based gas is generated.

12. The heat treatment method according to any one of claims 1 to 11, wherein, in the battery heating step, the lithium ion battery waste having a residual voltage of less than 2.4 V is heated.

13. The heat treatment method according to any one of claims 1 to 11, wherein, in the battery heating step, the lithium ion battery waste having a residual voltage of 2.4 V or more is heated.
